# EUROPÄISCHE PATENTSCHRIFT

(11) **EP 2 938 418 B1**
(45) Veröffentlichungstag und Bekanntmachung des Hinweises auf die Patenterteilung: **15.11.2017**
(21) Anmeldenummer: 14714658.3
(22) Anmeldetag: 27.03.2014
(51) Int. Cl.: B01D 29/11, B01D 29/35, B01D 29/64

(54) **PRESSSCHNECKENSEPARATOR**
SCREW PRESS SEPARATOR
SÉPARATEUR À VIS DE PRESSION

(30) Priorität: 24.04.2013 DE 202013003874 U
(43) Veröffentlichungstag der Anmeldung: 04.11.2015
(73) Patentinhaber: Röhren- und Pumpenwerk Bauer Ges.mbH, 8570 Voitsberg (AT)
(72) Erfinder: ROISS, Di Otto, 8010 Graz (AT); EICHLER, Dietrich, 01824 Königstein (DE)
(74) Vertreter: Hoefer & Partner Patentanwälte mbB
(86) Internationale Anmeldenummer: PCT/EP2014/056143
(87) Internationale Veröffentlichungsnummer: WO 2014/173612

(56) Entgegenhaltungen:
- DE-A1-102011 080 865
- DE-U1-202011 105 765

## Beschreibung

Die vorliegende Erfindung betrifft einen Pressschneckenseparator zur Abscheidung fester Bestandteile aus einer feste und flüssige Bestandteile enthaltenden Trübe.

Pressschneckenseparatoren werden zum Auspressen einer Trübe verwendet. Die Trübe k ann insbesondere Gülle oder Abwasser sein. Die Abwässer können sowohl aus kommunalen als auch aus industriellen Anlagen stammen, wobei diese stets in feste und flüssige Bestandteile getrennt werden sollen. In dem Gehäuse der Pressschneckenseparatoren ist üblicherweise ein zylindrisches Sieb angeordnet, innerhalb dessen eine Schnecke rotiert. Mittels der Schnecke wird die Trübe durch den Pressschneckenseparator gefördert und gepresst. Durch das Sieb hindurch treten die flüssigen Anteile der Trübe, während sich innerhalb des Siebes ein Feststoffpropfen ausbildet. Durch die rotierende Schnecke wird der Feststoffpropfen an ein Ende des Pressschneckenseparators gefördert, um dort ausgegeben zu werden. Über den Feststoffpropfen wird das Drehmoment von der Schnecke auf das Sieb übertragen. Deshalb muss das Sieb drehfest in dem Gehäuse angeordnet sein.

Es hat sich jedoch gezeigt, dass bei einem Auspressen von Feststoffen mit einem hohen Trockengehalt eine hohe Auspresskraft auf das Sieb wirkt. Daher ist oftmals ein Versagen des Siebes nicht auszuschließen. Ein Versagen des Siebes hat jedoch den Ausfall des kompletten Pressschneckenseparators oder dessen Beschädigung zur Folge.

DE 202011105765 U1 zeigt eine Siebanordnung für einen Pressschneckenseparator, umfassend einen steifen, hohlzylindrischen Mantel und ein an der Innenfläche des Mantels anliegendes hohlzylindrisches Sieb. Außen an dem Mantel sind Haltestäbe angebracht. Mit diesen Haltestäben ist die Siebanordnung im Pressschneckenseparator montiert und fixiert. Weiteren relevanten Stand der Technik zeigt DE 102011080865 A1.

Es ist Aufgabe der vorliegenden Erfindung, einen Pressschneckenseparator bereitzustellen, der bei einfacher und kostengünstiger Herstellung einen sicheren, zuverlässigen und wartungsarmen Betrieb ermöglicht.

Die Lösung der Aufgabe erfolgt durch den unabhängigen Anspruch. Die abhängigen Ansprüche haben vorteilhafte Weiterbildungen der Erfindung zum Inhalt.

Daher wird die Aufgabe gelöst durch einen Pressschneckenseparator, der ein Gehäuse umfasst, wobei in dem Gehäuse ein Rahmen angeordnet ist. Erfindungsgemäß ist vorgesehen, dass der Rahmen spielfrei in dem Gehäuse aufgenommen ist. Der Rahmen nimmt zumindest teilweise ein zylindrisches Sieb auf. Weiterhin umfasst der erfindungsgemäße Pressschneckenseparator eine innerhalb des Siebes angeordnete und um eine Längsachse des Siebes drehbeweglich gelagerte Schnecke zum Auspressen der Trübe. Erfindungsgemäß ist das Sieb daher zylindrisch ausgebildet, wobei auch der Rahmen bevorzugt zylindrisch ausgebildet ist. Der erfindungsgemäße Rahmen ermöglicht dabei eine teilweise Stabilisierung des Siebes, so dass das Sieb deutlich höhere Kräfte aufnehmen kann, als dies ohne Rahmen der Fall wäre.

Vorteilhafterweise ist der Rahmen in dem Gehäuse in einer Umfangsrichtung des Rahmens spielfrei gelagert. Auf diese Weise kann der Rahmen hohe Kräfte aufnehmen und diese in das Gehäuse weiterleiten. Daher können hohe im Sieb auftretende Kräfte absorbiert werden, so dass eine Beschädigung des Siebes aufgrund von Überbelastung verhindert wird. So kann die zuvor genannte Stabilisierung des Siebes erreicht werden.

In einer bevorzugten Weiterbildung ist der Rahmen mit dem Gehäuse verschraubt. Daher ist der Rahmen bevorzugt unbeweglich in dem Gehäuse fixiert. Die Verschraubung kann einfach wieder gelöst werden, beispielsweise um den Pressschneckenseparator zu zerlegen, was insbesondere für Reinigungen notwendig sein kann. Zusätzlich ermöglicht die Verschraubung, dass eine Verdrehung des Rahmens um die Längsachse des Siebes verhindert werden kann.

Weiterhin ist bevorzugt vorgesehen, dass der Rahmen zumindest eine Verstärkungsleiste aufweist, die sich parallel zu der Längsachse erstreckt. Dabei ist insbesondere vorgesehen, dass in der Verstärkungsleiste Bohrlöcher, Gewindelöcher und/oder Gewindestangen vorgesehen sind, mittels derer der Rahmen, wie zuvor beschrieben, mit dem Gehäuse verschraubt werden kann. Insbesondere ermöglicht die Verstärkungsleiste, den Rahmen sehr steif auszubilden, wodurch insbesondere eine Deformation des Siebes samt Rahmen verhindert werden kann.

Erfindungsgemäß ist ein erster Siebbereich des Siebs direkt in dem Gehäuse gelagert, während ein zweiter Siebbereich des Siebs in dem Rahmen gelagert ist. Somit erlaubt die erfindungsgemäße Anordnung den verstärkenden Rahmen nur an denjenigen Stellen des Siebes vorzusehen, an denen besonders hohe Kräfte auftreten und die daher potentielle Versagungsstellen sind. Der erste Siebbereich, der nicht von dem Rahmen umgeben ist, kann weiterhin sehr einfach direkt im Gehäuse gelagert sein.

Besonders bevorzugt ist vorgesehen, dass der erste Siebbereich elastisch verformbar ausgelegt ist. Insbesondere kann sich der erste Siebbereich elliptisch verformen, so dass ein Abstand zwischen Sieb und Schnecke verringert wird. Dabei wird jedoch ein direkter Kontakt zwischen Sieb und Schnecke vermieden. Auf diese Weise kann die Schnecke ausgepressten Feststoff, der sich an dem Sieb festsetzt, abtragen, wodurch eine Verschmutzung und damit eine Verstopfung des Siebes vermieden wird.

Der Rahmen ist besonders bevorzugt eingerichtet, den zweiten Siebbereich spielfrei zu lagern und/oder eine Deformation des zweiten Siebbereichs zu verhindern. Damit kann der Rahmen das Sieb in dem zweiten Siebbereich stützen, so dass hier keine Deformation und damit kein Versagen des Siebes möglich ist. Um die Funktionalität des Siebs dennoch zu gewährleisten, ist besonders bevorzugt vorgesehen, dass der Rahmen gitterartig, insbesondere aus einem Lochblech, aufgebaut ist. Der zweite Siebbereich ist insbesondere derjenige Bereich des Siebs, bei dem die größten Trockengehalte innerhalb des Pressschneckenseparators auftreten. Dies bedeutet, dass im zweiten Siebbereich die Trübe weitestgehend in ihre festen und flüssigen Bestandteile getrennt ist und sich der Pfropfen ausbildet.

Vorteilhafterweise weist der zweite Siebbereich eine Ausnehmung in Richtung der Längsachse auf. In diese Ausnehmung kann bevorzugt eine Nase des Rahmens eingreifen, um eine Rotation des zweiten Siebes um die Längsachse gegenüber des Rahmens zu verhindern. Da, wie Eingangs beschrieben, die Rotation der Schnecke auf das Sieb übertragen wird, kann auf diese Weise eine Torsion innerhalb des Siebes verhindert werden. Es ist somit möglich, unnötige Spannungen von dem Sieb fernzuhalten. Weiterhin kann die Nase ausgebildet sein, das Sieb innerhalb des Rahmens zu lagern. Alternativ oder zusätzlich kann die Nase ausgebildet sein, das Sieb innerhalb des Rahmens zu spannen. Dies kann insbesondere dadurch geschehen, dass das Sieb einen zylindrischen Grundkörper aufweist, wobei ein Schlitz parallel zur Längsachse über die gesamte Mantelfläche vorhanden ist. Daher kann eine in den Schlitz eingreifende Nase mit größerer Abmessung als der Schlitz den Außendurchmesser des Siebs erhöhen, um somit das Sieb in den Rahmen zu pressen.

In einer bevorzugten Ausführungsform weist der Rahmen eine Halteleiste auf, die mit dem Rest des Rahmens verbindbar ist. Besonders bevorzugt ist die Halteleiste mit dem Rahmen verschraubbar. Auf diese Weise ist bevorzugt die Nase des Rahmens bildbar. Dies hat den Vorteil, dass die Nase des Rahmens abnehmbar ist, was beispielsweise den Einbau und/oder den Ausbau des Siebes erleichtert.

Weiterhin ist bevorzugt vorgesehen, dass der zweite Siebbereich einen Anteil von bis zu 30%, insbesondere von bis zu 50%, des Siebes einnimmt. Wie zuvor beschrieben, treten innerhalb des zweiten Siebbereichs die höchsten Kräfte innerhalb des Pressschneckenseparators auf. Daher ist erfindungsgemäß der zweite Siebbereich entsprechend den genannten Werten zu wählen, um sicherzustellen, dass ein Versagen des Siebs durch Auftreten zu hoher Kräfte ausgeschlossen wird.

In einer weiteren vorteilhaften Ausführungsform umfasst der Rahmen zumindest eine Rippe, die sich bogenförmig um die Längsachse herum erstreckt. Eine derartige Rippe dient zum Versteifen des Rahmens, wodurch dieser höhere Kräfte aufnehmen kann, als dies dem Sieb allein möglich wäre. Daher kann die Rippe eine effektive Stützwirkung des Rahmens wahrnehmen.

Das Sieb weist bevorzugt eine Vielzahl von Stäben auf, die parallel zu der Längsachse orientiert sind. Derartige Stabsiebe weisen vorteilhafte Eigenschaften im Einsatz bei Pressschneckenseparatoren auf, da insbesondere keine in Umfangsrichtung verlaufenden Elemente vorhanden sind, die durch den von der Schnecke geförderten Feststoffpropfen beschädigt werden könnten.

Die Erfindung wird nun anhand eines Ausführungsbeispiels unter Berücksichtigung der beigefügten Zeichnungen detailliert beschrieben. In den Zeichnungen ist:
- Fig. 1: eine schematische Darstellung eines Pressschneckenseparators gemäß einem Ausführungsbeispiel der Erfindung, und
- Fig. 2: eine schematische Darstellung des zweiten Siebbereichs des Siebs zusammen mit dem Rahmen des Pressschneckenseparators gemäß dem bevorzugten Ausführungsbeispiel der Erfindung.

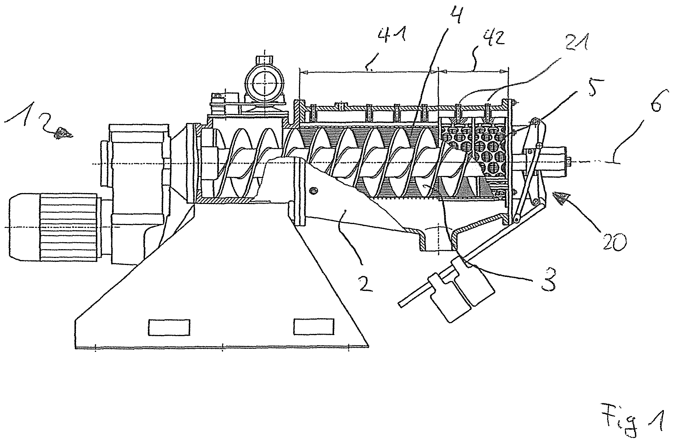

Fig. 1 zeigt einen Pressschneckenseparator 1, der ein Gehäuse 2 aufweist. Im Folgenden werden lediglich diejenigen Komponenten des Gehäuses 2 beschrieben, die für die vorliegende Erfindung von Bedeutung sind. Sämtliche restlichen Komponenten entsprechen denjenigen Komponenten, wie sie bei bekannten Pressschneckenseparatoren Verwendung finden.

Innerhalb des Gehäuses 2 ist eine Schnecke 3 angeordnet, die insbesondere zwei umlaufende Wendeln umfasst. Durch die Schnecke 3 kann eine Trübe verdichtet werden, so dass flüssige Bestandteile von festen Bestandteilen getrennt werden können. Dazu ist ein Sieb 4 vorhanden, das sich zylindrisch um die Schnecke 3 erstreckt. Das Sieb 4 weist eine Längsachse 6 auf, die gleichzeitig auch die Längsachse der Schnecke 3 ist. Weiterhin ist das Sieb 4 in einen ersten Siebbereich 41 und in einen zweiten Siebbereich 42 unterteilt. Dabei kann der erste Siebbereich eine Bauform aufweisen, die sich von der Bauform des zweiten Siebbereichs unterscheidet. Außerdem ist bevorzugt vorgesehen, dass der erste Siebbereich und der zweite Siebbereich getrennt voneinander eingebaut werden.

Der erste Siebbereich 41 ist, wie in der Patentschrift DE 102 46 397 B4 dargestellt, in dem Gehäuse 2 gelagert. In dem in Fig. 1 gezeigten Beispiel ist der erste Siebbereich 41 über in Fig. 1 nicht sichtbare Führungsschienen so mit dem Gehäuse 2 verbunden, dass nur tangential auftretende Kräfte übertragen werden, während sich bei der Verformung das Sieb in radialer Richtung frei bewegen kann.

Der zweite Siebbereich 42 ist von einem Rahmen 5 umgeben und innerhalb des Rahmens 5 spielfrei gelagert. Weiterhin verhindert der Rahmen 5 weitgehend eine Deformation des zweiten Siebbereichs 42. Der zweite Siebbereich 42 sowie der Rahmen 5 sind direkt vor einem Auslass 20 des Gehäuses angeordnet, da hier die höchsten Kräfte auf das Sieb 4 wirken. Dies resultiert aus der Tatsache, dass über die Längsachse 6 hinweg die Trübe verdichtet wird, wobei stetig flüssige Bestandteile durch das Sieb 4 hindurchtreten und die festen Bestandteile der Trübe innerhalb des Siebs 4 verbleiben. Somit steigt der Trockengehalt des innerhalb des Siebs 4 befindlichen Feststoffs stetig an, wenn sich der Feststoff dem Auslass 20 nähert. Durch den Rahmen 5 wird verhindert, dass der zweite Siebbereich 42 durch Auftreten zu hoher Kräfte zerstört wird. Der zweite Siebbereich 42 macht dabei in etwa ein Drittel der Gesamtlänge des Siebs 4 aus, was für eine Stützfunktion mit dem Rahmen 5 ausreichend ist. Insgesamt wird somit ein sicherer und zuverlässiger Betrieb ermöglicht, da das Sieb 4 vor Versagen geschützt ist.

Der Rahmen 5 ist spielfrei und insbesondere drehfest mit dem Gehäuse 2 verbunden. Hierfür werden Verschraubungen 21 verwendet, die eine einfache und kostengünstige Montage des Rahmens 5 innerhalb des Gehäuses 2 ermöglichen. Somit ist der zweite Siebbereich 42 über den Rahmen 5 drehfest, spielfrei und nicht deformierbar innerhalb des Gehäuses 2 gelagert, während der erste Siebbereich 41 weiterhin deformierbar, insbesondere elliptisch verformbar, innerhalb des Gehäuses 2 gelagert ist.

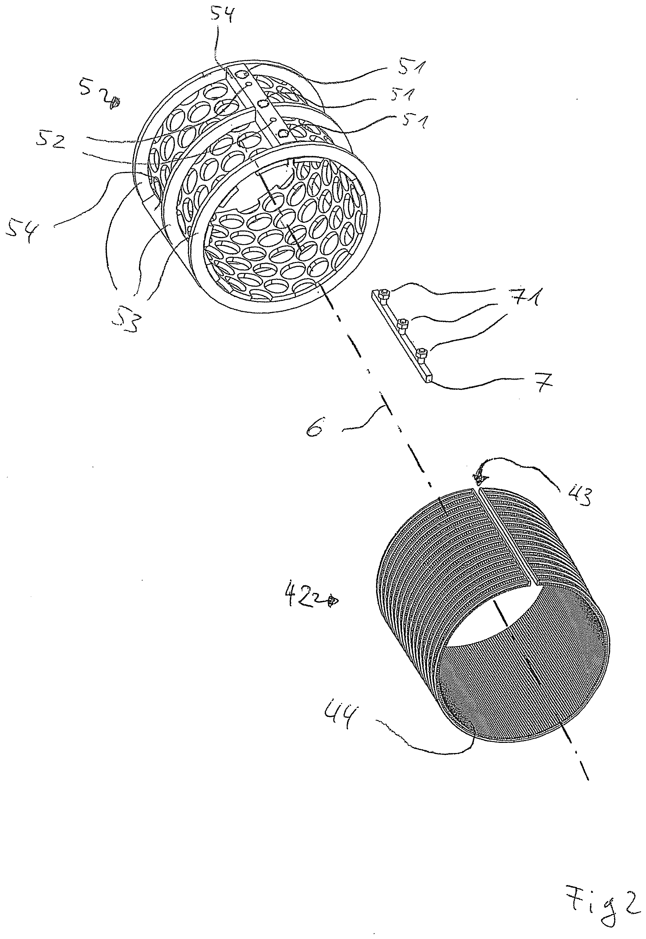

Aus Fig. 2 ist eine Explosionszeichnung ersichtlich, die den zweiten Siebbereich 42, den Rahmen 5, sowie eine Halteleiste 7, die eine Nase des Rahmens bildet, zeigt. Es ist ersichtlich, dass der zweite Siebbereich 42 eine Ausnehmung 43 aufweist, die sich über die gesamte Mantelfläche des zweiten Siebbereichs 42 parallel zu der Längsachse 6 erstreckt und bevorzugt durch Abschlussleisten verstärkt ist. In diese Ausnehmung 43 kann die Halteleiste 7 eingreifen, die insbesondere mit dem Rahmen 5 verschraubbar ist. Hierfür weist der Rahmen 5 eine Verstärkungsleiste 54 auf, in der Senklöcher 51 vorgesehen sind, so dass eine Verschraubung der Halteleiste 7 mittels einer Kombination aus Schrauben und Muttern 71 innerhalb der Verstärkungsleiste 54 erfolgen kann. Somit ist es insbesondere möglich, dass die Kombinationen aus Schrauben und Muttern 71 der Halteleiste 7 nicht über die Verstärkungsleiste 54 herausragen. Es ist ebenso möglich, dass die Halteleiste über andere Befestigungsmittel mit der Verstärkungsleiste 54 verbunden ist. Dies kann insbesondere eine Nietverbindung oder eine Klebeverbindung sein. Der Rahmen 5 kann weitere Verstärkungsleisten 54 aufweisen, wobei nicht jede Verstärkungsleiste 54 mit einer Halteleiste 7 versehen sein muss. Insbesondere ist vorgesehen, dass nur eine Halteleiste 7 an dem Rahmen 5 angeordnet ist. Die Verstärkungsleisten 54 können außerdem Gewindelöcher 52 aufweisen, die für die Verschraubung 21 (vergleiche Fig. 1) verwendet werden können. Somit kann der Rahmen 5 innerhalb des Gehäuses 2 (vergleiche Fig. 1) spielfrei und verdrehsicher gelagert werden.

Schließlich ist aus Fig. 2 ersichtlich, dass der Rahmen 5 Verstärkungsrippen 53 aufweist. Diese dienen insbesondere dazu, den Rahmen 5 weiter zu versteifen. Durch diese Versteifung ist es möglich, dass der Rahmen 53 hohe Kräfte von dem zweiten Siebbereich 42 aufnehmen kann. Daher ist ein Versagen des zweiten Siebbereichs 42 und damit des Siebes 4 nahezu ausgeschlossen.

Das Sieb 4 ist insbesondere als Stabsieb ausgeführt. Daher weist das Sieb 4 eine Vielzahl von Stäben 44 auf, die entlang der Längsachse 6 orientiert sind. Durch einen Abstand der Stäbe 44 zueinander wird eine Maschenweite des Siebs definiert, so dass die Güte des auszupressenden Feststoffs festgelegt werden kann. Verbunden sind die Stäbe 44 über einen spiralförmigen Tragstab oder mehrere ringförmige Tragstäbe, die sich um die Längsachse 6 erstrecken.

### Bezugszeichenliste

- 1: Pressschneckenseparator
- 2: Gehäuse
- 20: Auslass des Gehäuses
- 21: Verschraubung des Rahmens
- 3: Schnecke
- 4: Sieb
- 41: Erster Siebbereich
- 42: Zweiter Siebbereich
- 43: Ausnehmung
- 44: Längsstab
- 5: Rahmen
- 51: Senkloch
- 52: Gewindeloch
- 53: Rippe
- 54: Verstärkungsleiste
- 6: Längsachse
- 7: Halteleiste
- 71: Kombination aus Schraube und Mutter

## Patentansprüche

1. Pressschneckenseparator (1) zur Abscheidung fester Bestandteile aus einer feste und flüssige Bestandteile enthaltenden Trübe umfassend
- ein Gehäuse (2),
- einen im Gehäuse (2) angeordneten Rahmen (5),
- ein zylindrisches Sieb (4), das zumindest teilweise in dem Rahmen (5) angeordnet ist, und
- eine innerhalb des Siebes (4) angeordnete und um eine Längsachse (6) des Siebes (4) drehbeweglich gelagerte Schnecke (3) zum Auspressen der Trübe,
- wobei der Rahmen (5) spielfrei in dem Gehäuse (2) gelagert ist, **dadurch gekennzeichnet, dass**
- ein erster Siebbereich (41) des Siebs (4) direkt in dem Gehäuse (2) gelagert ist, während ein zweiter Siebbereich (42) des Siebs (4) in dem Rahmen (5) gelagert ist, so dass der Rahmen (5) nur an denjenigen Stellen des Siebes (4) vorgesehen ist, an denen besonders hohe Kräfte auftreten und die daher potentielle Versagungsstellen sind.

2. Pressschneckenseparator nach Anspruch 1, **dadurch gekennzeichnet, dass** der Rahmen (5) spielfrei in Umfangsrichtung in dem Gehäuse (2) gelagert ist.

3. Pressschneckenseparator nach Anspruch 1, **dadurch gekennzeichnet, dass** der Rahmen (5) mit dem Gehäuse (2) verschraubt ist.

4. Pressschneckenseparator nach einem der vorhergehenden Ansprüche, **dadurch gekennzeichnet, dass** der Rahmen (5) zumindest eine Verstärkungsleiste (54) aufweist, die sich parallel zu der Längsachse (6) erstreckt.

5. Pressschneckenseparator nach einem der vorhergehenden Ansprüche, **dadurch gekennzeichnet, dass** der erste Siebbereich (41) elastisch verformbar ausgelegt ist.

6. Pressschneckenseparator nach einem der vorhergehenden Ansprüche, **dadurch gekennzeichnet, dass** der Rahmen (5) den zweiten Siebbereich (42) spielfrei lagert und/oder eine Deformation des zweiten Siebbereichs (42) verhindert.

7. Pressschneckenseparator nach Anspruch 6, **dadurch gekennzeichnet, dass** der zweite Siebbereich (42) eine Ausnehmung (43) in Richtung der Längsachse (6) aufweist, in die eine Nase des Rahmens (5) eingreift, um eine Rotation des zweiten Siebbereichs (42) um die Längsachse (6) zu verhindern.

8. Pressschneckenseparator nach Anspruch 7, **dadurch gekennzeichnet, dass** der Rahmen (5) eine Halteleiste (7) umfasst, die mit dem Rahmen (5) verbindbar, insbesondere verschraubbar, ist, um so die Nase des Rahmens (5) zu bilden.

9. Pressschneckenseparator nach einem der vorhergehenden Ansprüche, **dadurch gekennzeichnet, dass** der zweite Siebbereichs (42) einen Anteil von bis zu 30%, insbesondere von bis zu 50%, des Siebes (4) einnimmt.

10. Pressschneckenseparator nach einem der vorhergehenden Ansprüche, **dadurch gekennzeichnet, dass** der Rahmen (5) zumindest eine Rippe (53) aufweist, die sich bogenförmig um die Längsachse (6) herum erstreckt.

11. Pressschneckenseparator nach einem der vorhergehenden Ansprüche, **dadurch gekennzeichnet, dass** das Sieb (4) eine Vielzahl von Stäben (44) aufweist, die parallel zu der Längsachse (6) orientiert sind.

## Claims

1. Press screw separator (1) for the separation of solids from a suspension containing solid and liquid components, comprising
- a housing (2),
- a frame (5) arranged inside the housing (2),
- a cylindrical screen (4) which is at least partly arranged in the frame (5), and
- a screw (3) arranged within the screen (4) and mounted rotatable around a longitudinal axis (6) of the screen (4) for pressing out the suspension,
- whereby the frame (5) is mounted in the housing (2) without play, **characterised in that**
- a first screen area (41) of the screen (4) is mounted directly in the housing (2), while a second screen area (42) of the screen (4) is mounted in the frame (5) so that the frame (5) is only provided in the places of the screen (4) where particularly great forces occur and which are potential points of failure as a result.

2. Press screw separator according to claim 1, **characterised in that** the frame (5) is mounted in the housing (2) without play in the circumferential direction.

3. Press screw separator according to claim 1, **characterised in that** the frame (5) is screwed onto the housing (2).

4. Press screw separator according to one of the claims above, **characterised in that** the frame (5) features at least one reinforcement bar (54) which runs in parallel to the longitudinal axis (6).

5. Press screw separator according to one of the claims above, **characterised in that** the first screen area (41) is designed elastically deformable.

6. Press screw separator according to one of the claims above, **characterised in that** the second screen area (42) is mounted in the frame (5) without play and/or the frame prevents a deformation of the second screen area (42).

7. Press screw separator according to claim 6, **characterised in that** the second screen area (42) features a recess (43) in the direction of the longitudinal axis (6), with which a lug of the frame (5) is in mesh in order to prevent rotation of the second screen area (42) around the longitudinal axis (6).

8. Press screw separator according to claim 7, **characterised in that** the frame (5) comprises a fixing bar (7) which can be connected with the frame (5), in particular can be screwed on it, and so constitutes the lug of the frame (5).

9. Press screw separator according to one of the claims above, **characterised in that** the second screen area (42) takes up a portion of up to 30%, in particular of up to 50 %, of the screen (4).

10. Press screw separator according to one of the claims above, **characterised in that** the frame (5) features at least one rib (53) which extends in the shape of an arc around the longitudinal axis (6).

11. Press screw separator according to one of the claims above, **characterised in that** the screen (4) features a multitude of rods (44) which are oriented in parallel to the longitudinal axis (6).

## Revendications

1. Séparateur à vis de pression (1) pour la séparation de composants solides d'une suspension contenant des composants solides et liquides, comprenant
- un boîtier (2),
- un cadre (5) disposé dans le boîtier (2),
- un tamis cylindrique (4) qui est disposé au moins partiellement dans le cadre (5), et
- une vis sans fin (3) disposée dans le tamis (4) et montée de façon à pouvoir tourner autour d'un axe longitudinal (6) du tamis (4) pour compresser la suspension,
- dans lequel le cadre (5) est monté sans jeu dans le boîtier (2), **caractérisé en ce que**
- une première zone de tamis (41) du tamis (4) est montée directement dans le boîtier (2), tandis qu'une seconde zone de tamis (42) du tamis (4) est montée dans le cadre (5), de sorte que le cadre (5) est prévu uniquement aux emplacements du tamis (4) où se produisent des forces particulièrement élevées et qui sont par conséquent des emplacements potentiels de refus.

2. Séparateur à vis de pression selon la revendication 1, **caractérisé en ce que** le cadre (5) est monté sans jeu dans une direction circonférentielle dans le boîtier (2).

3. Séparateur à vis de pression selon la revendication 1, **caractérisé en ce que** le cadre (5) est vissé avec le boîtier (2).

4. Séparateur à vis de pression selon l'une quelconque des revendications précédentes, **caractérisé en ce que** le cadre (5) présente au moins une barre de renforcement (54) qui s'étend de manière parallèle à l'axe longitudinal (6).

5. Séparateur à vis de pression selon l'une quelconque des revendications précédentes, **caractérisé en ce que** la première zone de tamis (41) est conçue de manière élastiquement déformable.

6. Séparateur à vis de pression selon l'une quelconque des revendications précédentes, **caractérisé en ce que** le cadre (5) supporte la seconde zone de tamis (42) sans jeu et/ou empêche une déformation de la seconde zone de tamis (42).

7. Séparateur à vis de pression selon la revendication 6, **caractérisé en ce que** la seconde zone de tamis (42) présente un évidement (43) dans la direction de l'axe longitudinal (6), dans lequel un nez du cadre (5) est en prise afin d'empêcher une rotation de la seconde zone de tamis (42) autour de l'axe longitudinal (6).

8. Séparateur à vis de pression selon la revendication 7, **caractérisé en ce que** le cadre (5) comprend une barre de maintien (7) qui peut être reliée, en particulier vissée, avec le cadre (5) afin de former ainsi le nez du cadre (5).

9. Séparateur à vis de pression selon l'une quelconque des revendications précédentes, **caractérisé en ce que** la seconde zone de tamis (42) occupe une part allant jusqu'à 30 %, en particulier jusqu'à 50 %, du tamis (4).

10. Séparateur à vis de pression selon l'une quelconque des revendications précédentes, **caractérisé en ce que** le cadre (5) présente au moins une nervure (53) qui s'étend en forme d'arc autour de l'axe longitudinal (6).

11. Séparateur à vis de pression selon l'une quelconque des revendications précédentes, **caractérisé en ce que** le tamis (4) présente une pluralité de baguettes (44) qui sont orientées de manière parallèle à l'axe longitudinal (6).
